# EUROPEAN PATENT SPECIFICATION

(11) **EP 2 783 356 B1**
(45) Date of publication and mention of the grant of the patent: **20.07.2022**
(21) Application number: 11876153.5
(22) Date of filing: 22.11.2011
(51) Int. Cl.: G08B 5/22

(54) **METHOD AND SYSTEM FOR LOCATION-BASED DELIVERY OF NOTICES OF ALARMS AND EVENTS**
VERFAHREN UND SYSTEM ZUR ORTSBASIERTEN ABGABE VON MELDUNGEN ZU ALARMEN UND EREIGNISSEN
PROCÉDÉ ET SYSTÈME DE FOURNITURE, BASÉE SUR L'EMPLACEMENT, D'AVIS D'ALARMES ET D'ÉVÉNEMENTS

(43) Date of publication of application: 01.10.2014
(73) Proprietor: Schneider Electric Buildings LLC, North Andover, MA 01845 (US)
(72) Inventor: LIANG, Jie, Nashua, NH 03062 (US)
(74) Representative: Dummett Copp LLP
(86) International application number: PCT/US2011/061806
(87) International publication number: WO 2013/077853

(56) References cited:
- EP-A1- 2 219 163
- WO-A1-2004/057901
- WO-A1-2007/088242
- WO-A1-2010/135775
- WO-A1-2011/060388
- WO-A2-2007/108919
- FR-A1- 2 877 184
- JP-A- 2002 237 908
- US-A1- 2002 026 266
- US-A1- 2005 195 079
- US-A1- 2006 145 841
- US-A1- 2008 166 992
- US-A1- 2008 242 261
- US-A1- 2008 267 360
- US-A1- 2009 029 672
- US-A1- 2009 146 829
- US-A1- 2011 086 609
- US-A1- 2011 227 730
- US-B1- 6 661 340

## Description

### FIELD OF THE INVENTION

The present invention relates to alarm and event handling systems and more particularly to the incorporation of location-based delivery of notice into an alarm and event handling system.

### BACKGROUND OF THE INVENTION

Alarm and event notice is meant to be delivered to operators for use in investigations. Timely responses are crucial to proper alarm and event handling. Currently in most systems, notice of alarms and events are delivered to a list of recipients. Recipients can be operators, workstations and/or devices. For a more efficient response, it would be advantageous to deliver notice of an alarm or event to operators, workstations, and/or devices, including mobile devices, nearest to the location where the alarm or event occurred.

US 2002/0026266 A1 discloses an automatic system for dispatching different types of emergency vehicle to an individual or a vehicle in need of assistance. The system determines the emergency vehicle that is in closest proximity to the individual or vehicle seeking assistance, sends a request to the emergency vehicle and if a confirmation is not received then determines the next closest vehicle to which the request is then sent.

WO 2007/108919 A2 discloses an automatic system for medical alarm monitoring within a medical facility. The system monitors different alarms at a plurality of bed stations. A central server is connected to a database in which pieces of equipment or specific patients are assigned geographical locations within the facility. The database also holds information on staff members, who are recipients of the medical alarms. The recipients' locations are automatically reported to the system. When an alarm is received by the system, the system determines who is the best responder, which may be the staff member closest to the alarm or another staff member depending on expertise.

US 2008/0166992 A1 discloses a health-related mobile emergency alert system which communicates with medical monitors that measure and collect a subject's health. A service provider maintains a database with the subject's medical records and an emergency contact list. When a critical event is detected, a two-way mobile communication device in communication with the medical monitor transmits health data and location coordinates of the subject to the service provider, and a conference call with members of the emergency contact list is initiated to help facilitate aid to the subject.

WO 2007/088242 A1 discloses a system for relaying and managing medical alarm messages sent from a personal safety phone to a service provider. The message is routed by a server which takes into account the availability of the service providers and distance between the person making the call and the service providers.

US 2008/0242261 A1 discloses an emergency rescue system for rescuing a person involved in a traffic accident or other hazard. A mobile phone sends a message including information on its environment and positional information to a rescue center.

### SUMMARY OF THE INVENTION

It has been recognized that introducing location-based delivery of notice into alarm and event delivery systems would greatly enhance the efficiency of the system and may even improve the safety and security of the area.

The invention is defined by a system for delivery to a recipient of notice of an alarm or event as claimed in claim 1 and by a corresponding method as claimed in claim 7. Preferred embodiments are set out in the dependent claims.

### BRIEF DESCRIPTION OF THE DRAWINGS

The foregoing and other objects, features, and advantages of the invention will be apparent from the following description of particular examples of the invention, as illustrated in the accompanying drawings in which like reference characters refer to the same parts throughout the different views. The drawings are not necessarily to scale, emphasis instead being placed upon illustrating the principles of the invention.
**Figure 1** shows a facility with various operators and workstations.
**Figure 2** shows a system of the present invention with alarm or event sources, controllers, and recipients, according to aspects of the present invention.
**Figure 3** shows a system according to the present invention as claimed using zones to calculate the distances between alarm or event sources and recipients.

### DETAILED DESCRIPTION OF THE INVENTION

It has been recognized that introducing location-based delivery of notice into alarm and event delivery systems would greatly enhance the efficiency of the system and may even improve the safety and security of the area. Efficiency would be increased if operators, workstations and/or devices, including mobile devices, nearest to the event and/or alarm were the ones to be notified and were the ones to respond. This is true for a few reasons. If a person is in distress or another time-sensitive incident has just occurred, it would be important to have the response-time as short as possible. This shorter response time would allow an operator to signal for help, or request back-up, if needed. Thus decreasing the time it takes for additional help or back-up to respond. Another reason it would be more efficient to incorporate location-based information is the alarm and event system would not unnecessarily dispatch operators and/or workstations located far away from the location of the event and/or alarm. Thus, the remote operators would be able to remain ready at their locations in case there were any intervening alarms or events. Operators would not waste valuable time traveling to a distant location of an incident only to find that other operators had already arrived and their services were not necessary. Furthermore, if a person or crew is dispatched and in the area, then there is an efficiency in any new events being routed to them. This holds true for general maintenance events as well.

The safety and security of a facility would likewise be improved if the events and/or alarms were handled more quickly. An operator might be able to catch sight of a fleeing suspect, gather important first impressions relevant to the cause of an incident, or help someone in imminent danger before other more remote operators are able to arrive in the area. Additionally, the security of the entire area would be not be disrupted by having distant operators and/or workstations respond to an event and/or alarm causing remote areas to be under-protected.

The system and method contemplates countless different types of events and alarms in the location-based delivery of notice event and alarm handling system. Events could be crimes, accidents, fires, lighting issues, IT and computer related issues, and the like. Alarms could be break-ins, fires, environmental conditions going out of range, IT and computer related issues, building safety alarms, such as motion, trip wires, invalid door access, and the like.

The method and system ranks recipients for use in the location-based delivery of notice alarm and/or event handling system. Notifications are generated by the system in real time. A recipient could be an operator (individual), a workstation, or a device, including mobile devices. When an alarm or event occurs, the system automatically ranks recipients based on their proximity to the location where the alarm and/or event occurred and a configuration engineer can have the option of selecting the nearest recipients. Or, when alarms and/or events occur, the nearest active recipient can be automatically selected by the system to receive the notification of the alarm and/or event. Depending on the alarm and/or event type, the system sorts the list of nearest recipients and ranks them based on other characteristics or factors such as work load, severities of the alarm and/or event, priority of the alarm and/or event, such as for the type of response/work needed. The alarms and/or events could be prioritized by categories, including security, facility, IT, and the like.

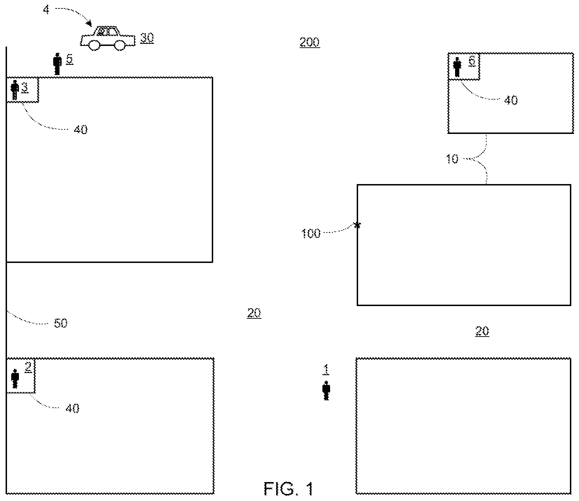

Alarm and event handling systems can monitor numerous areas which are spread out over a large area, and coordinate hundreds of operators, devices, and workstations. In the interest of simplicity, Figure 1 represents a simplified example of a facility using a location-based delivery of notice alarm and event handling system, showing only a handful of operators and workstations.

Referring to Figure 1, there are several operators 1-6 present in a facility 200. There are several buildings 10 as well as common areas 20 where operators might be found at any given time. Some operators are in vehicles 30, and some are in workstations 40. Some other operators 1, 5 are walking between buildings via the common areas 20. When an alarm or event occurs 100, each of the operators, workstations, and/or devices in the area are ranked in order of increasing distance from the alarm and/or event, in real time.

Still referring to Figure 1, when the event and/or alarm commences, the system generates the ordered list of available recipients. The system intelligently ranks the recipients using numerous factors. For example, the closest workstation has Operator 6 stationed at it, the closest operator on foot is Operator 1, but depending on distances or other factors, Operator 4 in the vehicle 30 might be in the best position to respond first. The system could rank recipients based on whether an operator was on foot or in a vehicle, whether they had special skills, and the like. Also, depending on the type of event and/or alarm, even though the Operator 2 is near the front gate 50 and is not the closest in proximity to the incident, Operator 2 might also be notified so that he/she may respond accordingly (either by calling for backup, monitoring the ongoing response, and/or placing the facility in lock-down.

Figure 1 is a very simplified diagram, but it is clear that generally it would not be efficient to have Operator 3 or 5 respond in this scenario. Not only would response time be increased if Operator 3 or 5 were the recipients to be notified, but the facility would then be under-protected in that area if there were an intervening alarm and/or event.

Many technologies could be used in gathering location information to prioritize a list of operators and/or workstations based on their proximity to an event and/or alarm. Workstations and devices could be at known locations (hard-coded) and would be easily sorted based on the location of the alarms. Operators and devices could be tracked using GPS, whether on foot or in a vehicle, and their locations could be incorporated into the ranking in real time.

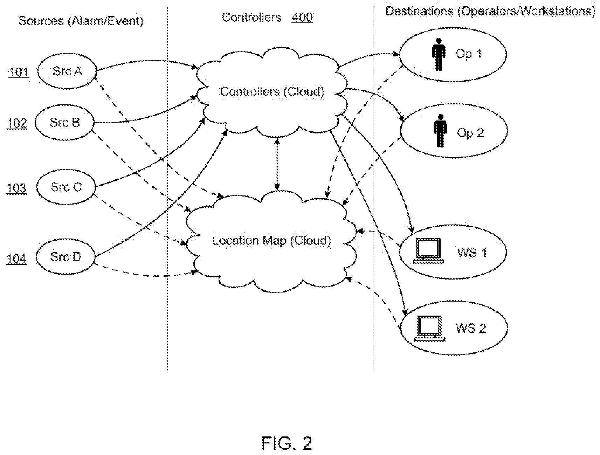

Referring to Figure 2, the system and method of location-based notification of alarm and/or event information receives input from numerous sources of alarm and/or event information 101-104. There is a controller 400 configured to evaluate the location of each of the recipients in reference to the location of the alarm or event in real time, wherein the controller is further configured to rank each of the at least two recipients in order of their proximity to the alarm or event as represented by the destination column. There, several operators and workstations are shown. It is also understood that recipients could be devices, either mobile or fixed, not shown.

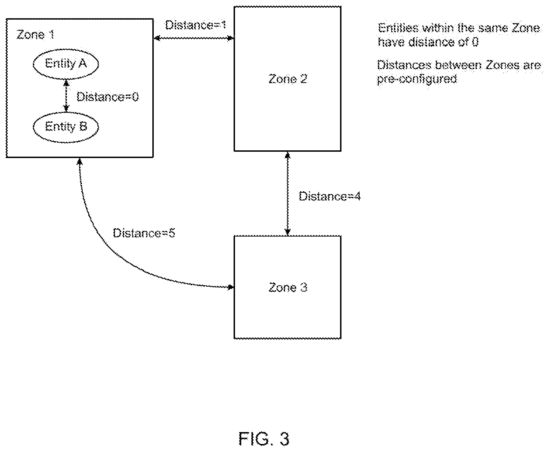

Referring to Figure 3 and according to the invention as claimed , the system and method of location-based notification of alarm and/or event information operates also in zones of known distances. The distances between zones are known and the presence of recipients in the same zone is considered to have a distance of zero.

While the principles of the invention have been described herein, it is to be understood by those skilled in the art that this description is made only by way of example and not as a limitation as to the scope of the invention. Other embodiments are contemplated within the scope of the present invention as set forth in the claims in addition to the exemplary embodiments shown and described herein.

## Claims

1. A system for delivery to a recipient of notice of an alarm or event (100) comprising:
a sensor configured to indicate an alarm or event (100) within a facility (200), wherein the alarm or event (100) occurs at a known location;
at least two recipients (1, 2, 3, 4, 5, 6) within the facility (200), wherein the location of each of the at least two recipients is capable of being determined in real time; and
a controller (400) configured to evaluate the location of each of the at least two recipients in reference to the location of the alarm or event (100) in real time, wherein the controller is further configured to rank each of the at least two recipients in order of their proximity to the location of the alarm or event (100) and also based on a factor other than proximity to the location of the event or alarm, the controller (400) being further configured to use said ranking for selecting some of the at least two recipients to which the notice of the alarm or event (100) is delivered;
wherein the system further comprises a plurality of zones and wherein the system is **characterized in that** it is configured to use said plurality of zones to calculate the distances between said location of the alarm or event and said recipients, wherein the system is further configured to know the distances between zones and to consider the presence of recipients in the same zone as having a distance of zero.

2. The system for delivery to a recipient of notice of an alarm or event (100) of claim 1, wherein the controller (400) is further configured to deliver notice of the alarm or event (100) to the recipient whose location is closest to the location of the alarm or event (100).

3. The system for delivery to a recipient of notice of an alarm or event (100) of claim 1, wherein some of the at least two recipients' locations is fixed.

4. The system for delivery to a recipient of notice of an alarm or event (100) of claim 1, wherein the system is further configured to determine some of the at least two recipients' locations using GPS.

5. The system for delivery to a recipient of notice of an alarm or event (100) of claim 1, wherein the at least two recipients are selected from the group consisting of operators, devices, and workstations.

6. The system for delivery to a recipient of notice of an alarm or event (100) of claim 1, wherein said factor is selected from the group consisting of work load, special skills, severity of the alarm and/or event, and priority of the alarm and/or event.

7. A method of automatic delivery to a recipient of notice of an alarm or event (100) comprising the steps of:
identifying the location of an alarm or event (100) within a facility (200);
determining in real time the location of each of at least two recipients within the facility (200);
ranking each of the at least two recipients in order of their proximity to the location of the event or alarm and also based on a factor other than proximity to the location of the event or alarm; and
using said ranking for selecting some of the at least two recipients and notifying them that attention is needed;
**characterized in that** the method further comprises using a plurality of zones to calculate the distances between said location of the alarm or event and said recipients, wherein the distances between zones are known and the distance between recipients located in the same zone is considered to be zero.

8. The method of delivery to a recipient of notice of an alarm or event (100) of claim 7, wherein the step of determining the location of some of the at least two recipients further comprises gathering GPS information.

9. The method of delivery to a recipient of notice of an alarm or event (100) of claim 7, wherein the step of determining the location of the at least two recipients further comprises the step of accessing a database containing the fixed location of some of the at least two recipients.

10. The method of delivery to a recipient of notice of an alarm or event (100) of claim 7, wherein the factor is selected from the group consisting of work load, special skills, severity of the alarm and/or event, and priority of the alarm and/or event.

11. The method of delivery to a recipient of notice of an alarm or event (100) of claim 7, wherein the at least two recipients are selected from the group consisting of operators, devices, and workstations.

## Patentansprüche

1. System zur Übermittlung der Meldung eines Alarms oder Ereignisses (100) an einen Empfänger, umfassend:
einen Sensor, der dazu ausgebildet ist, einen Alarm oder ein Ereignis (100) in einer Anlage (200) anzuzeigen, wobei der Alarm oder das Ereignis (100) an einem bekannten Ort stattfindet;
mindestens zwei Empfänger (1, 2, 3, 4, 5, 6) innerhalb der Anlage (200), wobei der Ort eines jeden der mindestens zwei Empfänger in Echtzeit ermittelt werden kann; und
eine Steuerung (400), die dazu ausgebildet ist, den Ort eines jeden der mindestens zwei Empfänger in Referenz zu dem Ort des Alarms oder Ereignisses (100) in Echtzeit auszuwerten, wobei die Steuerung ferner dazu ausgebildet ist, jeden der mindestens zwei Empfänger nach ihrer Nähe zu dem Ort des Alarms oder Ereignisses (100) und auch auf Basis eines anderen Faktors als der Nähe zu dem Ort des Ereignisses oder Alarms zu ranken, wobei die Steuerung (400) ferner dazu ausgebildet ist, das Ranking zur Auswahl einiger der mindestens zwei Empfänger, an die die Meldung des Alarms oder Ereignisses (100) übermittelt wird, zu verwenden;
wobei das System ferner eine Vielzahl von Zonen umfasst und wobei das System **dadurch gekennzeichnet ist, dass** es dazu ausgebildet ist, die Vielzahl von Zonen zur Berechnung der Entfernungen zwischen dem Ort des Alarms oder Ereignisses und den Empfängern zu verwenden, wobei das System ferner dazu ausgebildet ist, die Entfernungen zwischen den Zonen zu kennen und die Anwesenheit von Empfängern in derselben Zone als einen Abstand von Null aufweisend anzusehen.

2. System zur Übermittlung der Meldung eines Alarms oder Ereignisses (100) an einen Empfänger nach Anspruch 1, wobei die Steuerung (400) ferner dazu ausgebildet ist, die Meldung des Alarms oder Ereignisses (100) an den Empfänger zu übermitteln, dessen Ort am nächsten bei dem Ort des Alarms oder Ereignisses (100) liegt.

3. System zur Übermittlung der Meldung eines Alarms oder Ereignisses (100) an einen Empfänger nach Anspruch 1, wobei einige der Orte der mindestens zwei Empfänger feststehen.

4. System zur Übermittlung der Meldung eines Alarms oder Ereignisses (100) an einen Empfänger nach Anspruch 1, wobei das System ferner dazu ausgebildet ist, einige der Orte der mindestens zwei Empfänger mittels GPS zu ermitteln.

5. System zur Übermittlung der Meldung eines Alarms oder Ereignisses (100) an einen Empfänger nach Anspruch 1, wobei die mindestens zwei Empfänger aus der aus Bedienern, Geräten und Workstations bestehenden Gruppe ausgewählt sind.

6. System zur Übermittlung der Meldung eines Alarms oder Ereignisses (100) an einen Empfänger nach Anspruch 1, wobei der Faktor aus der aus Arbeitsbelastung, besonderen Fähigkeiten, Schwere des Alarms und/oder Ereignisses und Priorität des Alarms und/oder Ereignisses bestehenden Gruppe ausgewählt ist.

7. Verfahren zur automatischen Übermittlung der Meldung eines Alarms oder Ereignisses (100) an einen Empfänger mit den folgenden Schritten:
Feststellen des Ortes eines Alarms oder Ereignisses (100) in einer Anlage (200);
Echtzeitermittlung des Ortes eines jeden von mindestens zwei Empfängern in der Anlage (200);
Ranken eines jeden der mindestens zwei Empfänger nach ihrer Nähe zu dem Ort des Ereignisses oder Alarms und auch basierend auf einem anderen Faktors als der Nähe zu dem Ort des Ereignisses oder Alarms; und
Verwenden des Rankings zur Auswahl einiger der mindestens zwei Empfänger und hinweisen dieser darauf, dass ihre Aufmerksamkeit gebraucht wird;
**dadurch gekennzeichnet, dass** das Verfahren ferner das Verwenden einer Vielzahl von Zonen umfasst, um die Entfernungen zwischen dem Ort des Alarms oder Ereignisses und den Empfängern zu berechnen, wobei die Entfernungen zwischen den Zonen bekannt sind und die Entfernung zwischen den in derselben Zone befindlichen Empfängern als Null angesehen wird.

8. Verfahren zur Übermittlung der Meldung eines Alarms oder Ereignisses (100) an einen Empfänger nach Anspruch 7, wobei der Schritt der Ermittlung des Ortes von einigen der mindestens zwei Empfänger ferner das Sammeln von GPS-Informationen umfasst.

9. Verfahren zur Übermittlung der Meldung eines Alarms oder Ereignisses (100) an einen Empfänger nach Anspruch 7, wobei der Schritt der Ermittlung des Ortes der mindestens zwei Empfänger ferner den Schritt des Zugriffs auf eine Datenbank umfasst, die den festen Ort von einigen der mindestens zwei Empfänger enthält.

10. Verfahren zur Übermittlung der Meldung eines Alarms oder Ereignisses (100) an einen Empfänger nach Anspruch 7, wobei der Faktor aus der aus Arbeitsbelastung, besonderen Fähigkeiten, Schwere des Alarms und/oder Ereignisses und Priorität des Alarms und/oder Ereignisses bestehenden Gruppe ausgewählt ist.

11. Verfahren zur Übermittlung der Meldung eines Alarms oder Ereignisses (100) an einen Empfänger nach Anspruch 7, wobei die mindestens zwei Empfänger aus der aus Bedienern, Geräten und Workstations bestehenden Gruppe ausgewählt sind.

## Revendications

1. - Système pour délivrer, à un destinataire, un avis d'alarme ou d'événement (100) comprenant :
un capteur configuré pour indiquer une alarme ou un événement (100) à l'intérieur d'une installation (200), l'alarme ou l'événement (100) se produisant à un emplacement connu ;
au moins deux destinataires (1, 2, 3, 4, 5, 6) à l'intérieur de l'installation (200), l'emplacement de chacun des au moins deux destinataires étant apte à être déterminé en temps réel ; et
une unité de commande (400) configurée pour évaluer l'emplacement de chacun des au moins deux destinataires en référence à l'emplacement de l'alarme ou de l'événement (100) en temps réel, l'unité de commande étant en outre configurée pour classer chacun des au moins deux destinataires dans l'ordre de leur proximité à l'alarme ou l'événement (100) et également sur la base d'un facteur autre que la proximité à l'emplacement de l'événement ou de l'alarme, l'unité de commande (400) étant en outre configurée pour utiliser ledit classement pour sélectionner certains des au moins deux destinataires auxquels l'avis de l'alarme ou de l'événement (100) est délivré ;
le système comprenant en outre une pluralité de zones et le système étant **caractérisé par le fait qu'**il est configuré pour utiliser ladite pluralité de zones pour calculer les distances entre ledit emplacement de l'alarme ou de l'événement et lesdits destinataires, le système étant en outre configuré pour connaître les distances entre les zones et pour considérer la présence de destinataires dans la même zone comme ayant une distance nulle.

2. - Système pour délivrer, à un destinataire, un avis d'une alarme ou d'un événement (100) selon la revendication 1, dans lequel l'unité de commande (400) est en outre configurée pour délivrer un avis de l'alarme ou de l'événement (100) au destinataire dont l'emplacement est le plus proche de l'emplacement de l'alarme ou de l'événement (100) .

3. - Système pour délivrer, à un destinataire, un avis d'une alarme ou d'un événement (100) selon la revendication 1, dans lequel certains des emplacements des au moins deux destinataires sont fixes.

4. - Système pour délivrer, à un destinataire, un avis d'une alarme ou d'un événement (100) selon la revendication 1, le système étant en outre configuré pour déterminer certains des emplacements des au moins deux destinataires en utilisant un GPS.

5. - Système pour délivrer, à un destinataire, un avis d'une alarme ou d'un événement (100) selon la revendication 1, dans lequel les au moins deux destinataires sont choisis parmi le groupe constitué d'opérateurs, de dispositifs et de postes de travail.

6. - Système pour délivrer, à un destinataire, un avis d'une alarme ou d'un événement (100) selon la revendication 1, dans lequel ledit facteur est sélectionné parmi le groupe constitué d'une charge de travail, de compétences spéciales, d'une gravité de l'alarme et/ou de l'événement, et d'une priorité de l'alarme et/ou de l'événement.

7. - Procédé pour délivrer automatiquement, à un destinataire, un avis d'une alarme ou d'un événement (100) comprenant les étapes :
identifier l'emplacement d'une alarme ou d'un événement (100) à l'intérieur d'une installation (200) ;
déterminer en temps réel l'emplacement de chacun d'au moins deux destinataires à l'intérieur de l'installation (200) ;
classer chacun des au moins deux destinataires dans l'ordre de leur proximité à l'emplacement de l'événement ou de l'alarme et également sur la base d'un facteur autre que la proximité à l'emplacement de l'événement ou de l'alarme ; et
utiliser ledit classement pour sélectionner certains des au moins deux destinataires et leur notifier qu'une attention est requise ;
**caractérisé par le fait que** le procédé comprend en outre utiliser une pluralité de zones pour calculer les distances entre ledit emplacement de l'alarme ou de l'événement et lesdits destinataires, les distances entre les zones étant connues et la distance entre des destinataires situés dans la même zone étant considérée comme étant nulle.

8. - Procédé pour délivrer, à un destinataire, un avis d'une alarme ou d'un événement (100) selon la revendication 7, dans lequel l'étape de détermination de l'emplacement de certains des au moins deux destinataires comprend en outre collecter des informations GPS.

9. - Procédé pour délivrer, à un destinataire, un avis d'une alarme ou d'un événement (100) selon la revendication 7, dans lequel l'étape de détermination de l'emplacement des au moins deux destinataires comprend en outre l'étape d'accès à une base de données contenant l'emplacement fixe de certains des au moins deux destinataires.

10. - Procédé pour délivrer, à un destinataire, un avis d'une alarme ou d'un événement (100) selon la revendication 7, dans lequel le facteur est sélectionné parmi le groupe constitué d'une charge de travail, de compétences spéciales, d'une gravité de l'alarme et/ou de l'événement, et d'une priorité de l'alarme et/ou de l'événement.

11. - Procédé pour délivrer, à un destinataire, un avis d'une alarme ou d'un événement (100) selon la revendication 7, dans lequel les au moins deux destinataires sont sélectionnés parmi le groupe constitué d'opérateurs, de dispositifs et de postes de travail.
